# FASCICULE DE BREVET EUROPEEN

(11) **EP 0 894 520 B1**
(45) Date de publication et mention de la délivrance du brevet: **22.03.2006**
(21) Numéro de dépôt: 98401849.9
(22) Date de dépôt: 21.07.1998
(51) Int. Cl.: B01D 41/04, B01D 46/18, B01D 46/12

(54) **Procédé de filtration de poussières de four verrier**
Verfahren zum Filtern von Stäuben aus Glasschmelzöfen
Process for the filtration of dusts from a glass-melting furnace

(30) Priorité: 01.08.1997 FR 9709911
(43) Date de publication de la demande: 03.02.1999
(73) Titulaire: SAINT-GOBAIN EMBALLAGE, 92400 Courbevoie (FR)
(72) Inventeur: Mergy, Jacques, 4790 Lillesand (NO); Massart, Tanguy, 92400 Courbevoie (FR); Daudin, Philippe, 71100 Chalon sur Saone (FR)
(74) Mandataire: Muller, René

(56) Documents cités:
- EP-A- 0 406 561
- EP-A- 0 781 585
- DE-A- 3 401 875
- US-A- 1 644 082
- US-A- 3 880 629
- US-A- 4 042 667
- US-A- 4 208 201
- US-A- 5 361 790
- PATENT ABSTRACTS OF JAPAN vol. 097, no. 009, 30 septembre 1997 -& JP 09 136013 A (KAWASAKI HEAVY IND LTD), 27 mai 1997

## Description

L'invention concerne un procédé de filtration des poussières des effluents gazeux, notamment des gaz de combustion/fumées, qui sont émis par les fours du type four verrier industriel, notamment les fours verriers dits à flammes, c'est-à-dire utilisant principalement comme source d'énergie des brûleurs à gaz ou à fuel.

Parmi ces fours, la plupart sont équipés de régénérateurs, c'est-à-dire de récupérateurs de chaleur imposant une marche du four par cycles d'inversion. On peut citer, sans limitation, les fours dits à boucle, largement utilisés dans l'industrie du verre d'emballage, et les fours à brûleurs transversaux, utilisés aussi bien dans l'industrie du verre d'emballage que dans celle du verre plat. Peuvent aussi être concernés les fours utilisés dans l'industrie de la laine de verre ou de roche, ou de la fibre de verre textile dite de renforcement.

Le fonctionnement de ces fours verriers conduit à la formation d'effluents gazeux abondants. Ils proviennent non seulement de la combustion générant l'énergie nécessaire à la fusion des matières premières vitrifiables, mais aussi, notamment, de l'envol de matières vitrifiables dans la chambre de fusion, dans la zone d'enfournement et toute la zone du bain fondu recouverte de la composition vitrifiable, ou encore des échanges existant à l'interface entre le bain de verre fondu et l'atmosphère qui le surmonte, échanges qui entraînent la volatilisation dans l'atmosphère du four d'un certain nombre d'espèces chimiques du bain de verre.

Cela explique le fait que les effluents gazeux évacués en haut de cheminée puissent contenir des poussières de nature et d'origine diverses.

Les préoccupations croissantes liées à la protection de l'environnement conduisent à chercher à minimiser au mieux tout rejet, non seulement de certains gaz jugés polluants tels que les NOₓ, les COₓ ou les SOₓ, mais aussi de ces poussières. Cette volonté s'est ainsi traduite, notamment, par un engagement pris par l'industrie française du verre d'emballage (« L'engagement volontaire global pour l'environnement de l'industrie française du verre d'emballage ») souscrit par la Chambre Syndicale des verreries mécaniques de France en février 1997, venant compléter un arrêté ministériel signé le 21 octobre 1996 modifiant l'arrêté ministériel relatif à l'industrie du verre du 14 mai 1993.

Le but que s'est fixé l'invention a donc été de réduire le taux de poussières évacuées par les fours verriers de type four à flammes, de façon efficace, et dans des conditions de mise en oeuvre compatibles avec les installations industrielles actuelles.

L'invention a pour objet un procédé de filtration des poussières dans les effluents gazeux provenant d'un four verrier, notamment un four à flammes du type de ceux utilisant des brûleurs, notamment transversaux et fonctionnant en inversion ou non..Le procédé comprend les étapes suivantes :
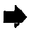 (a) on filtre au moins une partie des poussières d'au moins une partie desdits effluents à l'aide d'un média filtrant disposé en aval du four, à une vitesse de traversée d'au moins 0,1 m/s, notamment de 1 à 10 m/s,
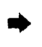 (b) on régénère le média filtrant par lavage à l'aide d'au moins un solvant, notamment à base d'eau, apte à dissoudre et/ou drainer la majorité des poussières filtrées.

On comprend au sens de l'invention par « poussières » toutes les espèces chimiques susceptibles de se trouver en phase liquide ou solide dans les conditions de température où s'opère la filtration.

On comprend au sens de l'invention par « vitesse de traversée » la vitesse à laquelle les poussières traversent effectivement le média filtrant, vitesse qui dépend donc de différents paramètres, notamment de la vitesse qu'ont les effluents chargés de poussières juste en amont du média filtrant, ainsi que de la dimension de la surface du média filtrant traversée par lesdits effluents.

On comprend au sens de l'invention par « en aval du four », toute localisation du media filtrant dans une zone de passage des effluents gazeux hors du four à proprement dit (c'est à dire sans comprendre les régénérateurs s'il y en a). De préférence, la filtration se fait soit au niveau des conduits d'évacuation des effluents gazeux entre le bas de régénérateurs s'il y en a ou l'extrêmité « aval » du four, et le pied de cheminée, soit au niveau de la cheminée elle-même. Par commodité, dans ce dernier cas, la filtration est de préférence faite en pied de cheminée, mais elle peut tout aussi bien être faite dans la cheminée ou à l'extrêmité haute de la cheminée (« amont » et « aval » se définissent par rapport à la direction d'évacuation des effluents).

En fait, les analyses ont montré que, généralement, les poussières en pied de cheminée sont essentiellement minérales, et pour au moins 50% et notamment au moins 80%, sous forme de sels tels que des sulfates du type PbSO₄, Na₂SO₄, K₂SO₄, des chlorures du type NaCl, KCI, ou encore sous forme de silice SiO₂, avec très fréquemment une forte prédominance du Na₂SO₄, notamment quand on fabrique un verre de type silico-sodo-calcique.

La plupart de ces poussières ont généralement une taille submicronique, notamment de l'ordre de 0,01 à 1 µm.

Le procédé selon l'invention a ceci d'extrêmement avantageux qu'il repose sur une filtration que l'on peut qualifier de « rapide », sans qu'elle s'accompagne de tous les inconvénients auxquels l'homme du métier aurait pu s'attendre.

En effet, on entend par filtration « rapide » le fait que le média filtrant choisi selon l'invention puisse filtrer des effluents gazeux qui le traversent à une vitesse variable dans une large gamme, et notamment asez élevée puisqu'elle peut même atteindre 10 m/s. Or, les effluents gazeux émis par les fours verriers ont en général une vitesse de l'ordre de 1 à 10 m/s, notamment d'environ 5 m/s dans leur circuit d'évacuation : la filtration selon l'invention peut ainsi se faire dans le conduit ou une dérivation du conduit d'évacuation des effluents, de manière très « modulable » en termes de vitesse de traversée du média filtrant. On peut ainsi conserver ou ne changer que très peu la vitesse des effluents juste en amont du média filtrant, la vitesse de traversée devenant approximativement celle que les effluents ont juste en amont, ce qui est avantageux puisque cette solution n'entraîne qu'un minimum de perturbation sur l'installation. Pour d'autres raisons techniques, on peut également sélectionner une vitesse de traversée relativement différente (jusqu'à un facteur 10 au plus de préférence) de la vitesse des effluents juste en amont du média filtrant, notamment en « freinant » ces effluents en jouant sur différents paramètres. On peut ainsi ajuster la vitesse de traversée en modifiant la vitesse des effluents en amont du média filtrant (par exemple en changeant la géométrie, les dimensions du conduit d'évacuation en amont) et/ou en modifiant la surface de traversée du média filtrant (notamment en l'augmentant).

Un tel choix allait à l'encontre de ce qui est connu des techniques de filtration des gaz. En effet, il est admis que, schématiquement, l'efficacité d'un filtre tend à diminuer quand la vitesse de filtration augmente. Ainsi, dans les techniques habituelles de filtration des gaz, il est plutôt usuel de choisir des vitesses bien moindres, de l'ordre de 0,01 à 0,05 m/s, et.pour ce faire, à diminuer si nécessaire la vitesse des gaz à filtrer en augmentant la surface de filtration, c'est-à-dire la surface du média filtrant traversée par les gaz : ce sont par exemple les filtres dits filtres à manche ou filtres plissés. EP 406 561 décrit un tel procédé de filtration des poussières dans les effluents gazeux provenant d'un four verrier, dans lequel la vitesse des effluents est ralentie pour le filtrage en raison du rapport de dimension entre la section du conduit en amont du dispositif de filtrage et le volume du bâti abritant le dispositif de filtrage, et le medium filtrant est consommé après utilisation, et non régénéré.

De manière surprenante, il s'est avéré inutile de diminuer autant la vitesse de filtration, le procédé selon l'invention permettant cependant d'atteindre une efficacité de filtration tout-à-fait acceptable. Une tentative d'explication pourraît être que, dans le cadre d'une filtration à haute vitesse comme l'invention, on a affaire à une filtration par « impactage » des particules filtrées sur le média filtrant, et non, comme cela est le cas des filtrations à plus basse vitesse, par agglutination progressive des particules les unes sur les autres, où les premières particules filtrées acquièrent en quelque sorte un pouvoir filtrant vis-à-vis des particules « arrivantes » suivantes (formation d'un « gâteau »). De fait, avec la filtration par « impactage » selon l'invention, les médias filtrants tendent à former non pas les « gâteaux » habituels très progressivement, ils tendent plutôt à se colmater de manière assez brusque. Concrètement, un tel colmatage rend les filtres plus difficiles à nettoyer en vue de leur recyclage.

C'est la raison pour laquelle l'invention a combiné à une filtration rapide une régénération des médias filtrants par lavage dans un solvant de type eau : l'invention a exploité avantageusement la forte solubilité dans l'eau d'une bonne partie des poussières qu'elle cherchait à filtrer, tout particulièrement celles qui se trouvent sous forme de sels, et qui sont généralement prédominants quantitativement quand on considère l'ensemble des poussières en suspension dans les effluents, notamment le sulfate de sodium Na₂SO₄ mais aussi NaCl et KCI : une fois filtrées, toutes ces particules se dissolvent aisément dans l'eau, et non seulement elles, mais aussi, par effet mécanique de drainage, une grande partie des autres particules non ou moins susceptibles de se dissoudre dans l'eau, par exemple les particules de silice. Ainsi, l'essentiel des particules filtrées s'élimine sans problème, ce qui permet de réutiliser un nombre de fois important les médias filtrants, condition essentielle pour la faisabilité économique de la filtration concernée par l'invention.

On a donc des cycles filtration/régénération en utilisant le nombre de médias filtrants suffisant pour qu'il n'y ait de préférence pas ou peu de temps mort entre deux filtrations opérées par deux médias filtrants se succédant.

Avantageusement, on choisit selon l'invention de filtrer les effluents gazeux à une température d'au moins 150°C, notamment d'au moins 180°C, et de préférence d'au plus 500 ou 400°C. Elle est avantageusement choisie autour de 200°C. Dans cette gamme de températures, la plupart des poussières que l'on veut filtrer sont déjà sous une forme liquide ou solide qui va permettre leur filtration. En outre, ce sont les températures qu'ont les effluents en aval du four : l'invention permet de les filtrer sans avoir à modifier leur température, notamment sans avoir à les refroidir, ce qui est évidemment intéressant industriellement puisque cela évite de compliquer l'installation.

A noter cependant que l'on peut, dans le cadre de l'invention, choisir de modifier, notamment de refroidir, les effluents gazeux dans la zone où s'opère la filtration.

Ces températures sont suffisamment élevées, cependant, pour qu'on limite la proportion de poussières à l'état liquide, qui tendent, pour au moins certaines d'entre elle telles que H₂SO₄ à boucher le média filtrant. Les températures de filtration ne dépassent pas, de préférence 400 ou 500°C : on a ainsi un choix plus large quant aux matériaux à partir desquels sont fabriqués les médias filtrants et tous les dispositifs, outillages permettant leur mise en place.

Selon un mode de réalisation préféré, on dispose le média filtrant, lors de la filtration, sensiblement en travers du conduit conduisant les effluents de la sortie du four, notamment des carneaux régénérateurs à la cheminée. Sa surface de traversée des effluents est alors avantageusement choisie sensiblement égale ou supérieure à la surface de la section dudit conduit. De préférence, c'est la totalité, ou l'essentiel, des effluents qui traverse le média filtrant une fois mis en place. Jouer sur la surface de traversée du média filtrant peut permettre d'ajuster, moduler, si nécessaire, la vitesse des effluents lors de leur filtration, comme évoqué plus haut.

Différentes caractéristiques propres aux médias filtrants permettent d'évaluer leurs performances/comportements, et, notamment, d'une part, la perte de charge. La perte de charge pour tout liquide ou gaz peut soit se mesurer expérimentalement, soit se calculer en utilisant, de manière connue, différents paramètres, dont Δp la perte de charge en Pa, Q le débit en m³/s, µ la viscosité en Pa.s, A la surface du matériau filtrant exposé au débit en m², H l'épaisseur du matériau filtrant en m, et enfin k le facteur de perméabilité en m².

Selon l'invention, on choisit de préférence des médias filtrants présentant une perte de charge (initiale), ainsi calculée, d'au plus 10000 Pa (100 mbar), notamment d'au plus 4000 Pa (40 mbar), de préférence d'au plus 2000 Pa (20 mbar), notamment entre 100 et 1000 Pa (entre 1 et 10 mbar).

Une autre caractéristique des médias filtrants est ce qu'on appelle le seuil de filtration absolu. Il est mesuré à partir de la valeur dite de point de bulle, qui est égal à la pression requise pour faire passer la première bulle dynamique à travers le filtre immergé (norme ISO 4003). La formule (valable seulement pour les filtres en fibres métalliques) qui indique le seuil de filtration absolu est 37000 divisé par le point de bulle en Pa.

Dans l'invention, ce seuil est de préférence d'au moins 20 µm, et notamment compris entre 40 et 80 µm. Cette gamme donne en fait une indication de la taille des pores du matériau filtrant, taille ici élevée qui explique au moins en partie la rapidité de la filtration. Ce qui est étonnant, c'est d'avoir sélectionné un tel média filtrant, alors même que la majorité des poussières à filtrer est, comme souligné précédemment, généralement de taille submicronique.

Avantageusement, le média filtrant est à base d'un matériau apte à supporter des températures de l'ordre de 150°C à 400°C et des atmosphères relativement corrosives, notamment à base d'un matériau métallique ou céramique qui peut être obtenu par frittage de particules, de fibres ou d'agencement de fibres du type tissus, feutre. Comme alliage métallique adéquat, on peut citer un acier inox du type 316L, ou encore un Inconel du type Inconel 601 ou encore tout alliage métallique résistant à l'oxydation à haute température.

A partir du moment où l'on effectue une filtration, on crée en aval du média filtrant une perte de charge qu'il est préférable de compenser. Selon l'invention, on a donc avantage à compenser au moins en partie la perte de charge créée par le média filtrant en disposant en « aval » de celui-ci un dispositif adhoc, notamment du type ventilateur. (Les termes « aval » ou « amont » font référence à la disposition du dispositif par rapport à la position du média filtrant en fonction de la direction de déplacement des effluents gazeux à filtrer). Ce dispositif peut être choisi de façon à ce qu'il puisse moduler cette compensation. Ainsi, s'il s'agit d'un ventilateur, il peut éventuellement présenter une vitesse de rotation variable et/ou un angle d'inclinaison des pales réglable.

En effet, le média filtrant est utilisé de façon cyclique, chaque cycle étant séparé du suivant par au moins une étape de régénération. Si l'on connaît précisément la perte de charge initiale du média filtrant neuf, celle-ci peut évoluer légèrement après un nombre important de régénérations. En outre, au cours du cycle de filtration, la perte de charge évolue, augmente. Toutes ces variations peuvent être mesurées précisément, à l'aide de capteurs adaptés, pour ensuite pouvoir réguler, automatiquement, semi-automatiquement ou manuellement, le (les) dispositif(s) destiné(s) à compenser la perte de charge de média filtrant.

Pour plus de simplicité, on peut choisir de garder le dispositif « aval » du type ventilateur en fonctionnement selon un régime constant, et de moduler au contraire au moins un autre dispositif, plutôt placé en « amont » et du type volet(s) réglable(s) : le(s) dispositif(s) « aval » va (vont) prendre en charge la plus grande partie de la compensation de perte de charge, le(s) dispositif(s) « amont » venant plutôt la régler plus précisément, notamment en venant compenser, au moins en partie, les variations de perte de charge dans le temps induites par le média filtrant.

On a vu que le média filtrant devait être régénéré périodiquement. La périodicité peut être réglée en fonction d'un paramètre mesuré en continu ou en discontinu pendant le cycle de filtration. Il peut notamment s'agir d'un seuil d'augmentation de la perte de charge créé par le média filtrant.

Un autre choix consiste à optimiser le média filtrant de manière à ce que la périodicité coïncide avec celle de cycles d'inversion du four, généralement toutes les 20 minutes environ. Ainsi, on peut « profiter » du moment où l'on change de cycle d'inversion du four, moment déjà source de perturbations dans le régime du four, pour changer les médias filtrants.

Selon une variante préférée de l'invention, lorsqu'il y a une présence non négligeable de sulfates de plomb PbSO₄, et après avoir réalisé successivement, une fois l'étape de filtration des poussières, et autant de fois l'étape de régénération du média filtrant par lavage à l'aide d'un solvant à base d'eau, on réalise en outre une étape b' de régénération du média filtrant par lavage à l'aide d'un solvant à base de soude NaOH.

La soude permet de régénérer le média filtrant de manière très efficace lorsque celui-ci est encrassé par des particules de sulfate de plomb PbSO₄. Le nombre n sera par exemple choisi en fonction d'un seuil prédéterminé du poids du média filtrant, directement proportionnel à la perte de charge induite par ce dernier.

D'autres paramètres peuvent intervenir selon cette étape pour déterminer la nature et la concentration de la soude employée.

Ainsi, avantageusement, le taux de PbSO₄ décelé dans les poussières, typiquement de l'ordre de 5% au maximum, pourra être pris en compte.

Avantageusement également, on veillera, dans le cadre de l'invention, à séparer les particules de PbSO₄ filtrées de la soude NaOH, de manière à réintroduire dans la composition de matières premières vitrifiables toute ou partie de la quantité de soude utilisée. Cela permet encore de baisser le coût de la filtration conforme à l'invention de manière indirecte en baissant le coût des matières premières.

En outre, dans ce contexte, on veillera à ce que la concentration de la soude ne dépasse pas 1 mole/litre, ce qui facilite la séparation prévue ci-dessus.

D'autres solvants susceptibles de dissoudre les particules de PbSO4 pourront bien évidemment être utilisés dans le cadre de l'invention. Ainsi, l'acétate d'ammonium (H₃COONH₄) et l'acétate de sodium (H₃COONa) se sont révélés particulièrement efficaces.

On peut, selon un mode de réalisation de l'invention, utiliser une configuration de filtre du type bande sans fin, où la zone de filtration en cours de cycle de filtration est progressivement décalée pour laisser place à une zone « neuve » ou régénérée. Ainsi, on peut maintenir, pour l'essentiel, la perte de charge créée par le média filtrant à une valeur constante.

On peut avoir à déplacer, extraire le média filtrant pour le régénérer. On peut alors le remplacer par un autre média filtrant neuf ou régénéré, concomitamment, avant ou après l'extraction du filtre à régénérer.

On peut préférer effectuer la régénération du média filtrant « in situ », sans avoir à l'extraire de sa position de filtration. Dans ce cas, on peut prévoir avantageusement au moins deux filtres fixes « en parallèle », par exemple chacun dans une dérivation du conduit d'évacuation des effluents gazeux, l'un opérant la filtration pendant que l'autre est régénéré, en utilisant des moyens du type vannes pour guider alternativement les effluents dans l'une ou l'autre des dérivations.

La régénération du média filtrant s'effectue de préférence par au moins un trempage dans un bain de solvant du type eau, ou alors un arrosage statique ou mobile, ou sous forme de ruissellement dudit solvant. La régénération peut optionnellement s'achever par un séchage du type séchage à l'air comprimé.

Si on le veut, on peut recycler tout ou partie du solvant, du type eau, chargé de poussières obtenu à l'issue des régénérations des médias filtrants, notamment en le réintroduisant dans le four, tout particulièrement pour participer à l'humidification des matières vitrifiables dans la zone d'enfournement. En effet, il est usuel d'ajouter de l'eau aux matières premières avant leur enfournement. Utiliser l'eau de régénération dans ce but est d'autant plus avantageux qu'elle amène avec elle des matières du type Na₂SO₄, ou silice qui peuvent servir en tant que matières premières elles-aussi. On obtient ainsi un double avantage industriel on peut éviter d'avoir des eaux à retraiter, et, en plus, on peut faire des gains de coût de matières premières.

Pour optimiser au mieux ce recyclage, il est préférable de prévoir des dosages des eaux à recycler, afin notamment de pouvoir si nécessaire les diluer en fonction de la quantité d'eau totale requise pour faire l'humidification des matières premières, et savoir précisément les quantités de matières réintroduites dans le four.

Bien sûr, on peut aussi utiliser les eaux de régénération dans d'autres buts.

L'invention a également pour objet l'utilisation du procédé de filtration précédemment décrit de façon à ce que le four verrier émette au plus 150 mg de poussières par Nm³ de fumées normées à 8% d'oxygène, notamment au plus 50 mg/Nm² normé à 8% d'oxygène et/ou au plus 0,35 kg de poussières par tonne de verre fondu, notamment au plus 0,2 kg. Ces seuils sont notamment ceux recommandés dans les engagements et arrêté ministériel cités au début du présent texte.

L'invention a également pour objet l'installation de four verrier apte à mettre en oeuvre le procédé de filtration selon l'invention. Ainsi, l'installation est avantageusement équipée au niveau du ou d'au moins un des conduits d'évacuation des effluents gazeux entre la sortie du four, notamment la sortie des régénérateurs, et la cheminée, ou en pied de cheminée, d'un média filtrant apte à filtrer les poussières à plus de 1 m/s, et dont les caractéristiques en termes de perte de charge et seuil de filtration absolu sont de préférence celles évoquées plus haut. On peut atteindre grâce à l'invention une efficacité de filtration d'au moins 20%, notamment d'au moins 50 à 95%, si l'on définit l'efficacité par le rapport (exprimé en pourcentage en poids) entre le taux de poussières retenues par le média filtrant et le taux de poussières contenues dans les effluents.

Dans l'installation, le média filtrant est généralement déposé sur ou fixé à un appareillage du type porte-filtre mobile susceptible de le déposer en cycle de filtration sensiblement transversalement à la section du conduit d'amenée des effluents gazeux, apte à l'en extraire périodiquement pour le régénérer, et à le remplacer. Comme mentionné plus haut, les médias filtrants peuvent aussi être fixés à demeure, en faisant fonctionner « en parallèle » au moins deux médias.

L'installation, comme évoqué plus haut, peut aussi être munie d'au moins un moyen de compensation de perte de charge dans le conduit en aval du média filtrant et éventuellement d'au moins un moyen de compensation en amont, notamment de la variation de perte de charge en fonction du temps dudit média. Au moins un de ces moyens peut être commandé de manière automatisée ou semi-automatisée par des moyens informatiques/électroniques selon une boucle de régulation à l'aide de capteurs du type capteurs de pression.

L'installation est aussi de préférence équipée de moyens de régénération, notamment à proximité du conduit où la filtration s'effectue. Ces moyens peuvent comprendre des moyens de lavage à l'eau des médias filtrants du type bains, des moyens d'arrosage mobile ou statique, des moyens de ruissellement, éventuellement associés à des moyens de récupérations des eaux de lavage du type cuve de stockage. Les moyens de régénérations peuvent en outre comprendre des moyens de lavage à la soude. Peuvent aussi être prévus des moyens de recyclage de ces eaux de lavage pour les réintroduire dans le four, notamment dans la zone d'enfournement. Ils peuvent comprendre des moyens d'analyse de ces eaux, de moyens éventuels de dilution et de moyens d'amenée jusqu'au four.

L'invention sera ci-après décrite plus en détail à l'aide d'un mode de réalisation non limitatif illustré par les figures suivantes :
- **figure 1 :** un schéma d'installation de four verrier utilisant le procédé de filtration selon l'invention,
- **figure 2** : une vue agrandie du schéma de la figure 1 dans la zone où se trouve le filtre,
- **figure 3** : une vue agrandie du schéma de la figure 1 dans la zone où se trouve le filtre, dans une configuration différente de celle de la figure 2,
- **figure 4** : un schéma de la technique de régénération des filtres et recyclage des eaux de lavage selon l'invention.

Ces figures sont extrêmement schématiques, sans souci d'échelle ou de représentation rigoureuse, afin d'en faciliter la lecture.

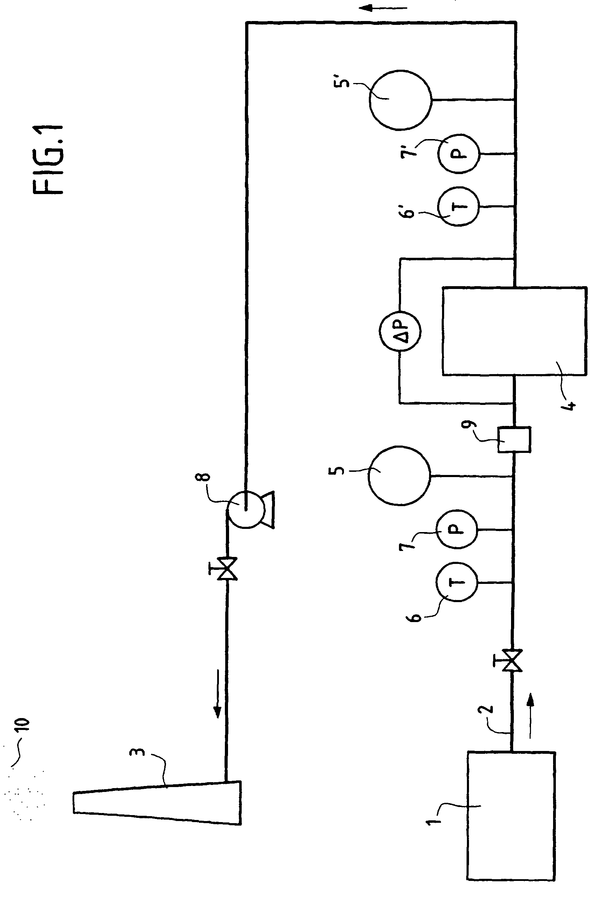

La figure 1 représente donc une installation de four verrier dans son ensemble. Il s'agit ici d'un four verrier du type four à boucle fonctionnant en inversion utilisé dans l'industrie du verre d'emballage. Tout autre four verrier, notamment pour fabriquer du verre plat et/ou ne fonctionnant pas en inversion, peut utiliser l'invention dans des conditions similaires.

Ici, il s'agit de la fabrication de verre fondu standard silico-sodo-calcique à l'aide du four 1 venant alimenter par une pluralité de canaux (non représentés) des outillages de formage de verre creux (également non représentés, mais bien connus de l'homme de l'art).

En bas des régénérateurs, également appelés carneaux. (non représentés) constitués de manière connue d'empilages de réfractaires, sont émises des quantités importantes d'effluents gazeux guidés par un ou une pluralité de conduits 2 vers la ou les cheminée(s) 3 destinée(s) à les évacuer à l'atmosphère ambiante. Le débit des effluents dans ce conduit peut, pour donner un ordre de grandeur non limitatif, être d'au moins 1000 Nm³ par heure, et notamment pour les installations industrielles, plutôt de l'ordre de 10000 à 30000 Nm³ par heure. Leur vitesse est d'au moins 1 m/s. Dans le four représenté, elle est d'environ 3 à 5 m/s.

En sortie de régénérateurs, les effluents sont déjà bien épuisés thermiquement. Ils sont cependant encore à une température qui peut être de l'ordre de 400 à 500°C, alors qu'en pied de cheminée ils n'ont déjà plus qu'une température de l'ordre de 200 à 250°C.

Dans l'invention, on dispose dans le conduit 2 un système de filtration qui comprend un filtre 4, un analyseur de poussières amont 5 et un analyseur de poussière aval 5' (« amont » et « aval » se réfèrent à la direction d'évacuation des effluents montrée par les flèches), des capteurs de températures amont et aval 6 et 6' et des capteurs de pression amont et aval 7 et 7'. Le système comprend en outre un ventilateur 8 aval et un volet 9 amont ajustable. Le filtre se trouve dans une zone où les effluents sont à une température entre 200 et 400°C, d'environ 300°C.

A titre d'exemple, on peut considérer qu'une composition type de poussières comprend majoritairement du Na₂SO₄ en forte proportion (solubilité en grammes pour 100 grammes d'eau à 20°C : environ 19,3), mais aussi du SiO₂ (insoluble dans l'eau), du NaCl (solubilité de 26,37 avec les mêmes conventions), du K₂SO₄ (solubilité de 10 avec les mêmes conventions) et éventuellement du KCl (solubilité de 25,4 avec les mêmes conventions).

Le filtre 4 choisi a les caractéristiques suivantes : on préfère qu'il ait la perte de charge la plus faible possible, de manière à pouvoir la compenser facilement sans surcoût important en termes de dépense d'outillages du type ventilateur aval 8 et de dépense énergétique lié à leur utilisation. On sélectionne donc le filtre pour qu'il ait une perte de charge initiale de 1000 Pa (10 mbar) au maximum, ce qui peut être compensé par un seul ventilateur. (Il va de soi que l'on peut aussi en restant dans le cadre de l'invention utiliser des filtres à perte de charge plus élevée si un gain autre qu'économique peut être lié à ce choix). Son seuil de filtration absolu est de préférence choisi d'au moins 20 µm, par exemple d'environ 60 µm. Il est placé transversalement à l'axe de défilement des effluents dans le conduit 2 qui a une section d'environ 1 à 4 m², sans plissage.

Si on le souhaite, on peut vouloir diminuer la perte de charge créee par le filtre et/ou la vitesse de traversée du filtre par les effluents gazeux, par trois moyens différents : augmenter la surface de traversée en plissant le filtre, diminuer le temps de filtration ou trouver un filtre moins performant. Le choix s'est ici porté sur un filtre de la gamme Bekipor commercialisé par la société Bekaert, notamment le filtre métallique fritté Bekipor ST à base de fibres d'acier inoxydable. L'important est qu'il puisse supporter des températures élevées et que l'on puisse choisir le seuil de filtration dans une gamme large de 1 à 100 µm.

La filtration s'opère de la façon suivante : on place un filtre neuf ou régénéré en position de filtration à un instant donné, coïncidant de préférence avec la période d'inversion dans le four 1. On mesure à l'aide des capteurs de presion 7, 7' la perte de charge Δp initiale puis tout au long du cycle de filtration du filtre, qui est par exemple identique (10 à 20 minutes) à ceux du four. On compense ensuite la perte de charge initiale, par exemple 10 mbar, à l'aide du ventilateur 8 dont on ne modifie par le régime tout au long du cycle de filtration. En fonction de la variation de perte de charge △p mesurée, on ajuste la position ou l'inclinaison du volet 9, de façon à compenser ces variations au mieux, en continu ou à des intervalles de temps réguliers.

Le mieux est que la commande du volet 9 se fasse à l'aide d'un système de régulation avec asservissement à la mesure de la pression amont et aval par les capteurs 7, 7'.

La comparaison des mesures effectuées par les analyseurs 5, 5' permet de mesurer et de régler en conséquence l'efficacité de la filtration en modulant certains des paramètres de la filtration. Il s'est avéré que cette efficacité était d'au moins 30%, et que, si nécessaire, elle pouvait être optimisée jusqu'à des valeurs très élevées approchant les 90 à 95%. On peut bien sûr la moduler en fonction du taux de poussières mesuré en amont, les effluents pouvant avoir une concentration en poussières variable au cours du temps (on peut aussi choisir de ne filtrer qu'une partie des effluents gazeux émis par le four).

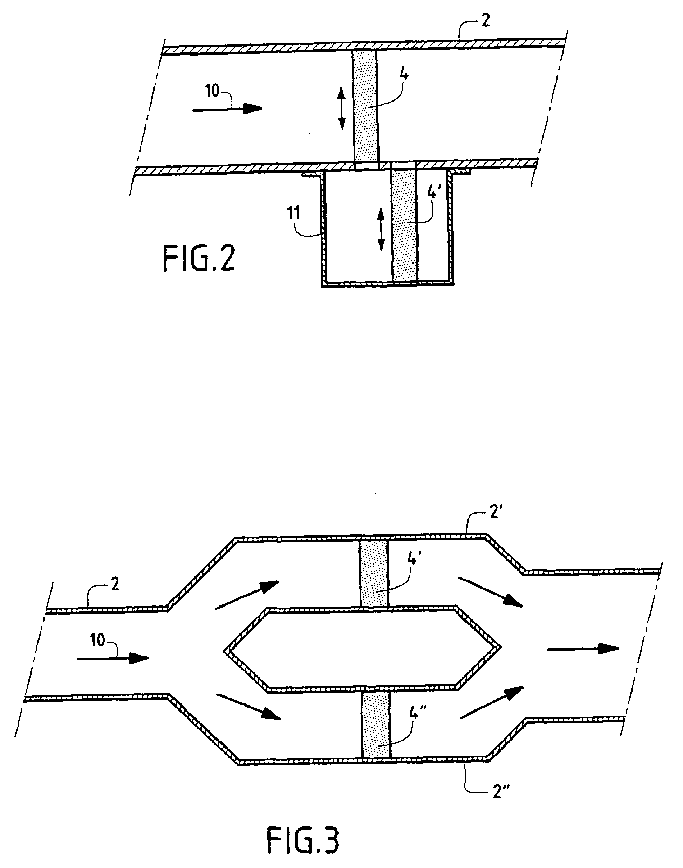

En fin de cycle de filtration, on remplace le filtre près du colmatage par un filtre régénéré, ce qui est montré plus explicitement à l'aide de la figure 2 : un système porte-filtre 11 accolé au conduit 2' met en place un filtre 4 en travers de la section du conduit 2'. Une fois son cycle de filtration achevé, le porte-filtre est apte à l'échanger par un filtre régénéré 4' qui est placé en position d'attente pendant le cycle de filtration du filtre 4. Les deux filtres fonctionnent ainsi en alternance, l'un étant régénéré pendant que l'autre est en filtration.

Une alternative consiste à faire défiler dans la section du conduit un filtre 4" en ruban continu pour avoir une perte de charge constante.

Une autre alternative est représentée en figure 3 : dans cette configuration, le conduit 2 dans la zone de filtration se sépare en deux tronçons 2' et 2 " identiques, chacun équipé respectivement d'un filtre 4' et 4" identiques au filtre 4 de la figure 2. Les effluents gazeux du conduit 2 passent alternativement dans l'un et l'autre des deux tronçons 2' et 2", à l'aide de systèmes de vannes non représentés commandés automatiquement à la même fréquence que celle du remplacement de filtre opéré à la figure 2. Quand les effluents passent dans le conduit 2', le filtre 4' joue son rôle de filtrage, tandis que le filtre 4" du conduit 2" est régénéré « in situ » par immersion arrosage de solvant). Quand les effluents passent dans le conduit 2", inversement le filtre 4" joue son rôle de filtrage tandis que le filtre 4' est régénéré.

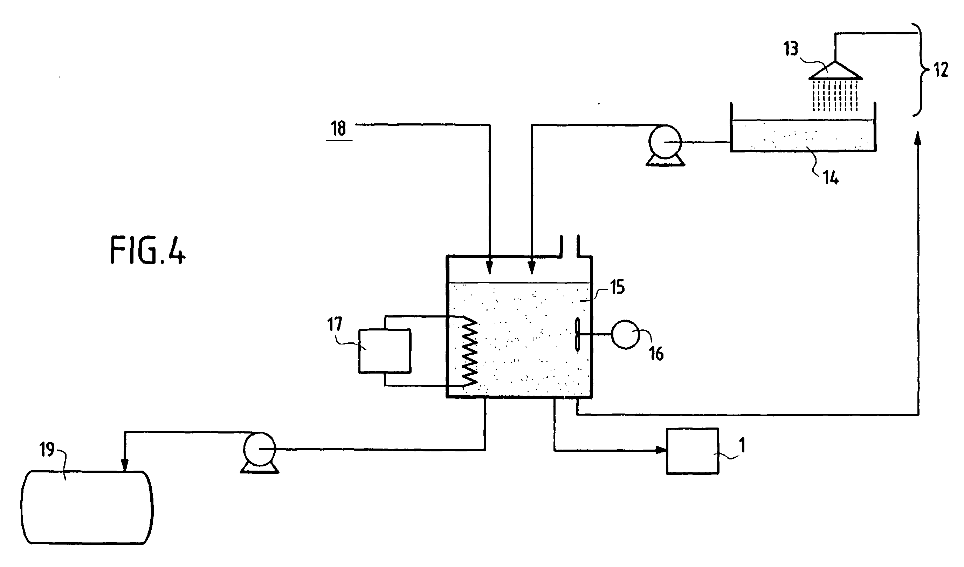

La figure 4 permet d'illustrer la régénération du filtre 4 disposé selon la figure 2 : le filtre 4 est évacué vers un système de lavage 12 comprenant un système d'arrosage 13 d'eau et un bac de récupération 14. L'eau de lavage est ensuite stockée dans un bac de rétention 15 dont on contrôle et régule de préférence à la fois l'homogénéité, la température à l'aide d'agitateurs mécaniques 16 et de moyens refroidisseurs 17 et/ou chauffants, ainsi que le pH optionnellement par des moyen de mesure et de régulation de pH non représentés. En fait, la dissolution des poussières se fait d'autant mieux que la chaleur des filtres vient réchauffer l'eau de lavage, que l'on peut choisir à température ambiante ou éventuellement déjà chauffée à 30 ou 40°C (la solubilité des sels à l'eau augmente sensiblement avec la température). Après dosage des poussières dans ces eaux, on les dilue éventuellement avec de l'eau de ville 18 amenée par les conduits appropriés, puis on vient puiser dans ces eaux régulées en composition, en température et éventuellement en pH, pour les injecter vers l'humidificateur des matières premières vitrifiables en tête de four 1. On peut également évacuer tout ou partie de ces eaux vers une cuve de stockage 19 et/ou recycler une partie de ces eaux de lavage dans le système de lavage 12.

Il peut être avantageux de prévoir en outre des moyens de filtration en phase liquide de particules de granulomètrie importante (non représentés) notamment au niveau des sorties du bac de rétention 15, de façon à prévenir le bouchage des différents conduits si jamais des particules solides de taille non négligeable finissaient par précipiter dans le bac 15. Le filtre régénéré 4 est, lui, séché à l'air comprimé puis remis en position d'attente dans le système porte-filtre 11.

En conclusion, l'invention a mis au point un système de filtration très intéressant, qui peut se définir principalement par
- un filtre efficace à grande vitesse,
- une régénération du filtre exploitant la solubilité et/ou la capacité de drainage des poussières filtrées dans l'eau,
- un système de régulation de poussières palliant à la perte de charge (variable) créée par le filtre,
- éventuellement un recyclage des eaux de lavage avec réintroduction dans le four.

L'avantage industriel est important : peu de perturbation à installer ce procédé sur des lignes existantes, grande souplesse de mise en oeuvre, coût raisonnable, et objectifs fixés dans les différentes normes existantes atteints.

## Revendications

1. Procédé de filtration des poussières dans les effluents gazeux provenant d'un four verrier, notamment un four à flammes du type de ceux fonctionnant avec des brûleurs avec ou sans inversion, ***caractérisé en ce qu*'**il comprend les étapes suivantes :
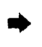 (a) on filtre au moins une partie des poussières d'au moins une partie desdits effluents à une vitesse de traversée d'au moins 0,1 m/s, notamment d'au moins 1 à 10 m/s à l'aide d'un média filtrant disposé en aval du four,
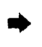 (b) on régénère le média filtrant par lavage à l'aide d'au moins un solvant, notamment à base d'eau, apte à dissoudre et/ou drainer la majorité des poussières filtrées.

2. Procédé de filtration selon la revendication 1, ***caractérisé en ce qu'***on filtre les effluents à une température d'au moins 150°C, et de préférence inférieure à 500 ou 400°C.

3. Procédé de filtration selon l'une des revendications précédentes, ***caractérisé en ce que*** le média filtrant est disposé sensiblement en travers du conduit conduisant les effluents de la sortie au four, notamment des carneaux régénérateurs, à la cheminée, ou dans la cheminée ou à sa sortie, et ***en ce qu'**il* présente une surface de traversée des gaz/fumées sensiblement égale ou supérieure à la surface de la section dudit conduit/de ladite cheminée.

4. Procédé de filtration selon l'une des revendications précédentes, ***caractérisé en ce qu*'**on filtre avec un média filtrant présentant une perte de charge initiale d'au plus 10 000 Pa, notamment d'au plus 4000 Pa, de préférence compris entre 100 et 1000 Pa.

5. Procédé de filtration selon l'une des revendications précédentes, ***caractérisé en ce qu'**on* filtre avec un média filtrant présentant un seuil de filtration absolu d'au moins 20 µm, notamment compris entre 40 et 80 µm.

6. Procédé de filtration selon l'une des revendications précédentes, ***caractérisé en ce que*** le média filtrant est à base d'un matériau métallique ou céramique, notamment obtenu par frittage de particules, de fibres ou d'agencement de fibres du type tissus, feutre.

7. Procédé de filtration selon l'une des revendications précédentes, ***caractérisé en* ce *que*** lors de la filtration, on compense au moins une partie de la perte de charge créée par le média filtrant à l'aide d'au moins un dispositif disposé « en aval » du média filtrant, notamment du type ventilateur éventuellement à vitesse de rotation et/ou angle d'inclinaison des pales réglable(s).

8. Procédé de filtration selon la revendication 7, ***caractérisé en ce qu'**on* associe à (aux) dispositif(s) « aval » au moins un dispositif « amont » du type volet ajustable, notamment destiné à compenser au moins en partie les variations de perte de charge dans le temps induites par le média filtrant.

9. Procédé de filtration selon l'une des revendications précédentes, ***caractérisé en* ce qu'**on régénère le média filtrant périodiquement, la périodicité pouvant coïncider avec celle des cycles d'inversion du four ou être réglée en fonction d'une valeur-seuil fixée d'augmentation de la perte de charge créée par le média filtrant.

10. Procédé selon l'une quelconque des revendications précédentes, ***caractérisé en* ce *qu'on*** réalise n fois:
→ l'étape a) de filtration des poussières,
→ l'ètape b) de régénération du média filtrant par lavage à l'aide d'un solvant à base d'eau,
et **en *ce qu'****après* la nième étape b), on réalise en outre une étape b' de régénération du média filtrant par lavage à l'aide d'un solvant à base de soude NaOH.

11. Procédé selon l'une des revendications précédentes, ***caractérisé en ce que*** la configuration du média filtrant du type bande sans fin autorise le maintien de la perte de charge créé par ledit média pendant la filtration.

12. Procédé selon l'une des revendications précédentes, ***caractérisé en ce qu'**on* déplace le média filtrant pour le régénérer, avec remplacement, notamment concomittant ou postérieur, par un autre média filtrant neuf ou régénéré.

13. Procédé selon l'une des revendications 1 à 11, ***caractérisé en ce qu'***on régénère le média filtrant in situ sans l'extraire de sa position de filtration, notamment en prévoyant d'utiliser au moins deux médias filtrants.

14. Procédé selon l'une des revendications précédentes, ***caractérisé* en *ce que*** la régénération du média filtrant s'effectue par au moins un trempage dans un bain de solvant, un arrosage statique ou mobile, ou un ruissellement, s'achevant optionnellement par un séchage du type séchage à l'air comprimé.

15. Procédé de filtration selon l'une des revendications précédentes, ***caractérisé en* ce *que*** tout ou partie du solvant chargé en poussières lors de la régénération du média filtrant est recyclé dans le four, notamment pour participer à l'humidification des matières vitrifiables avant leur enfournement.

16. Utilisation du procédé de filtration selon l'une des revendications précédentes de façon à ce que le four verrier émette au plus 150 mg de poussières Nm³ de fumées normé à 8% d'O₂, de préférence au plus 50 mg/Nm³ à 8% d'O₂ et/ou au plus 0,35 kg de poussières par tonne de verre fondu, notamment au plus 0,2 kg.

## Patentansprüche

1. Verfahren zum Filtern von Staub aus dem Abgas, das aus einem Glasschmelzofen, insbesondere einem Flammenofen vom Typ derjenigen, die mit Brennern mit gegebenenfalls Umkehr arbeiten, stammt, **dadurch gekennzeichnet, dass** es die Stufen:
a) Filtern von wenigstens einem Teil des Staubs aus wenigstens einem Teil des Abgases mit einer Durchtrittsgeschwindigkeit von mindestens 0,1 m/s, speziell mindestens 1 bis 10 m/s, mittels eines nach dem Ofen angeordneten Filtermediums und
b) Regenerieren des Filtermediums durch Waschen mit mindestens einem Lösungsmittel, speziell auf Wasserbasis, das in der Lage ist, den größten Teil des herausgefilterten Staubs zu lösen und/oder abzuführen,
umfasst

2. Filterverfahren nach Anspruch 1, **dadurch gekennzeichnet, dass** das Abgas bei einer Temperatur von mindestens 150 °C und vorzugsweise von unter 500 oder 400 °C gefiltert wird.

3. Filterverfahren nach einem der vorhergehenden Ansprüche, **dadurch gekennzeichnet, dass** das Filtermedium im Wesentlichen quer zu der das Abgas von dem Ofenausgang ableitenden Leitung, insbesondere den Regeneratorzügen, bei dem Schornstein bzw. in dem Schornstein oder dessen Ausgang, angeordnet ist, und dass es einen Durchtrittsquerschnitt für Gas/Rauch aufweist, der im Wesentlichen gleich oder größer als der Querschnitt der Leitung/des Schornsteins ist.

4. Filterverfahren nach einem der vorhergehenden Ansprüche, **dadurch gekennzeichnet, dass** mit einem Medium gefiltert wird, das einen anfänglichen Druckverlust von höchstens 10 000 Pa, insbesondere höchstens 4 000 Pa, und vorzugsweise 100 bis 1 000 Pa aufweist.

5. Filterverfahren nach einem der vorhergehenden Ansprüche, **dadurch gekennzeichnet, dass** mit einem Filtermedium gefiltert wird, das eine absolute Filtergrenze von mindestens 20 µm und insbesondere von 40 bis 80 µm aufweist.

6. Filterverfahren nach einem der vorhergehenden Ansprüche, **dadurch gekennzeichnet, dass** das Filtermedium auf der Basis eines metallischen oder keramischen Materials ist, das insbesondere durch Sintern von Teilchen bzw. Fasern erhalten worden oder eine Faseranordnung vom Typ einer Web- bzw. Wirkware oder eines Filzes ist.

7. Filterverfahren nach einem der vorhergehenden Ansprüche, **dadurch gekennzeichnet, dass** wenigstens ein Teil des von dem Filtermedium verursachten Druckverlusts mittels mindestens einer nach dem Filtermedium angeordneten Vorrichtung, insbesondere vom Typ Gebläse, gegebenenfalls mit regelbarer Umdrehungsgeschwindigkeit und/oder regelbarem Neigungswinkel der Rotorblätter, während des Filterns kompensiert wird.

8. Filterverfahren nach Anspruch 7, **dadurch gekennzeichnet, dass** zu der/den "stromabwärtigen" Vorrichtung/en mindestens eine "stromaufwärtige" Vorrichtung vom Typ einstellbare Klappe, die insbesondere vorgesehen ist, wenigstens einen Teil der im Laufe der Zeit von dem Filtermedium verursachten Druckverlustschwankungen zu kompensieren, hinzugefügt wird.

9. Filterverfahren nach einem der vorhergehenden Ansprüche, **dadurch gekennzeichnet, dass** das Filtermedium periodisch regeneriert wird, wobei die Periodizität mit derjenigen der Umkehrzyklen des Ofens übereinstimmen oder in Abhängigkeit von einem festgelegten Grenzwert des Anstiegs des vom Filtermedium verursachten Druckverlusts geregelt werden kann.

10. Verfahren nach einem der vorhergehenden Ansprüche, **dadurch gekennzeichnet, dass** die
- Stufe a) Staubfiltern und
- Stufe b) Regenerieren des Filtermediums durch Waschen mit einem Lösungsmittel auf Wasserbasis
n Mal durchgeführt werden,
und dass nach der n-ten Stufe b) zusätzlich eine Stufe b' des Regenerierens des Filtermediums durch Waschen mit einem Lösungsmittel auf der Basis von Natronlauge, NaOH, durchgeführt wird.

11. Verfahren nach einem der vorhergehenden Ansprüche, **dadurch gekennzeichnet, dass** die Gestaltung des Filtermediums vom Typ eines Endlosbandes das Aufrechterhalten des von diesem Medium während des Filterns verursachten Druckverlusts ermöglicht.

12. Verfahren nach einem der vorhergehenden Ansprüche, **dadurch gekennzeichnet, dass** das Filtermedium, um es zu regenerieren, bei dem Austausch gegen ein neues oder regeneriertes anderes Filtermedium, insbesondere gleichzeitig oder anschließend, bewegt wird.

13. Verfahren nach einem der Ansprüche 1 bis 11, **dadurch gekennzeichnet, dass** das Filtermedium, ohne es aus seiner Filterposition zu entfernen*, in situ* regeneriert wird, insbesondere, indem vorgesehen ist, mindestens zwei Filtermedien zu verwenden.

14. Verfahren nach einem der vorhergehenden Ansprüche, **dadurch gekennzeichnet, dass** das Regenerieren des Filtermediums durch mindestens ein Eintauchen in ein Lösungsmittelbad, ein statisches bzw. mobiles Berieseln oder ein Begießen, an welches sich wahlweise eine Trocknung vom Typ einer Drucklufttrocknung anschließt, erfolgt.

15. Filterverfahren nach einem der vorhergehenden Ansprüche, **dadurch gekennzeichnet, dass** das gesamte Lösungsmittel, das während des Regenerierens des Filtermediums mit Staub beladen wird, oder ein Teil davon in den Ofen zurückgeleitet wird, insbesondere, um an der Befeuchtung der Glasrohstoffe vor deren Beschickung teilzunehmen.

16. Anwendung des Filterverfahrens nach einem der vorhergehenden Ansprüche derart, dass der Glasschmelzofen höchstens 150 mg Staub/Nm³ mit 8 % O₂ normiertes Abgas und vorzugsweise höchstens 50 mg/Nm³ mit 8 % O₂ und/oder höchstens 0,35 kg und insbesondere höchstens 0,2 kg Staub pro Tonne Glasschmelze emittiert.

## Claims

1. Method for filtering dust from gaseous effluents issuing from a glass furnace, particularly a fired furnace of the type operating with burners with or without inversion, **characterized in that** it comprises the following steps:
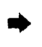 (a) at least a portion of the dust is filtered from at least a portion of the said effluents at a flow-through speed of at least 0.1 m/s, particularly at least 1 to 10 m/s, using a filter medium arranged downstream of the furnace,
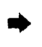 (b) the filter medium is regenerated by washing with at least one solvent, particularly a water-based solvent, suitable for dissolving and/or draining most of the filtered dust.

2. Filtration method according to Claim 1, **characterized in that** the effluents are filtered at a temperature of at least 150°C, and preferably lower than 500 or 400°C.

3. Filtration method according to one of the preceding claims, **characterized in that** the filter medium is arranged substantially across the line conveying the effluents from the furnace outlet, particularly the regenerator flues, to the stack, or in the stack or at its outlet, and **in that** it has a gas/smoke flow area substantially equal to or greater than the cross-sectional area of the said line/the said stack.

4. Filtration method according to one of the preceding claims, **characterized in that** the filter medium has an initial pressure drop not exceeding 10 000 Pa, particularly not exceeding 4000 Pa, and preferably of between 100 and 1000 Pa.

5. Filtration method according to one of the preceding claims, **characterized in that** the filter medium has an absolute filtration threshold of at least 20 *µ*m, particularly of between 40 and 80 *µ*m.

6. Filtration method according to one of the preceding claims, **characterized in that** the filter medium is based on a metallic or ceramic material, particularly one obtained by sintering particles, fibres or of an arrangement of fibres of the fabric or felt type.

7. Filtration method according to one of the preceding claims, **characterized in that** during the filtration, at least a part of the pressure drop created by the filter medium is offset using at least one device arranged "downstream" of the filter medium, particularly of the fan type, optionally with adjustable speed of rotation and/or blade pitch angle.

8. Filtration method according to Claim 7, **characterized in that** the "downstream" device(s) is (are) associated with at least one "upstream" device of the adjustable flap type designed in particular to least partly offset the variations in pressure drop over time caused by the filter medium.

9. Filtration method according to one of the preceding claims, **characterized in that** the filter medium is periodically regenerated, the frequency optionally coinciding with that of the furnace inversion cycles or being adjusted as a function of a set threshold value of the increase of the pressure drop created by the filter medium.

10. Method according to any one of the preceding claims, **characterized in that** the following are carried out n times:
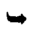 step a) of dust filtration,
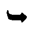 step b) of regeneration of the filter medium by washing with a water-based solvent,
and **in that** after the nth step b), a step b' of regeneration of the filter medium is further carried out by washing with a caustic soda NaOH based solvent.

11. Method according to one of the preceding claims, **characterized in that** the configuration of the endless belt-type filter medium enables the pressure drop created by the said medium during filtration to be kept constant.

12. Method according to one of the preceding claims, **characterized in that** the filter medium is moved to regenerate it, with replacement, particularly simultaneously or subsequently, by another fresh or regenerated filter medium.

13. Method according to one of Claims 1 to 11, **characterized in that** the filter medium is regenerated in situ without extracting it from its filtration position, particularly by providing for the use of at least two filter media.

14. Method according to one of the preceding claims, **characterized in that** the filter medium is regenerated by at least one dipping in a solvent bath, one static or moving spray, or a trickling, optionally terminating in a drying of the compressed air type.

15. Filtration method according to one of the preceding claims, **characterized in that** all or part of the dust-laden solvent during the regeneration of the filter medium is recycled to the furnace, particularly to participate in the moistening of the batch materials before their charging.

16. Use of the filtration method according to one of the preceding claims, so that the glass furnace emits no more than 150 mg of dust per Sm³ of flue gases standardized to 8% O₂, preferably no more than 50 mg/Sm³ to 8% O₂ and/or no more than 0.35 kg of dust per tonne of molten glass, particularly no more than 0.2 kg.
